(19) Europäisches Patentamt

European Patent Office

Office européen des brevets

(11) **EP 1 249 694 B1**

(12) **EUROPÄISCHE PATENTSCHRIFT**

(45) Veröffentlichungstag und Bekanntmachung des Hinweises auf die Patenterteilung:
**07.06.2006   Patentblatt 2006/23**

(51) Int Cl.:
***G01M 5/00*** *(2006.01)*

(21) Anmeldenummer: **02405231.8**

(22) Anmeldetag: **25.03.2002**

(54) **Verfahren zur Bestimmung des elasto-plastischen Verhaltens von aus anisotropem Material bestehenden Bauteilen sowie Anwendung des Verfahrens**

Procedure for determining the elastical-plastical behaviour of structures made of anisotropical material and application of the procedure

Procédé de détermination du comportement élastique-plastique de structures à matériaux anisotropiques et application du procédé

(84) Benannte Vertragsstaaten:
**DE GB**

(30) Priorität: **14.04.2001   DE 10118542**

(43) Veröffentlichungstag der Anmeldung:
**16.10.2002   Patentblatt 2002/42**

(73) Patentinhaber: **Alstom Technology Ltd 5400 Baden (CH)**

(72) Erfinder:
 • **Bernhardi, Otto Dr.**
  **76669 Bad Schönborn (DE)**
 • **Mücke, Roland Dr.**
  **5210 Windisch (CH)**

(56) Entgegenhaltungen:
 • **R.S. ALWAR, SURESH BABU: "Inelastic strain concentration in directionally solidified materials" TRANSACTIONS OF THE CANADIAN SOCIETY FOR MECHANICAL ENGINEERING, Bd. 19, Nr. 3, 1995, Seiten 331-346, XP008027252**
 • **K.S. LOND, Y.W. KWON, G.H. LINDSEY: "Investigation of inelastic stress concentrations around notches, Part II: experimental study" INTEGRITY OF STRUCTURES AND FLUID SYSTEMS, PIPING AND PIPE SUPPORTS, AND PUMPS AND VALVES, Bd. 356, 1997, Seiten 39-52, XP008027253**

EP 1 249 694 B1

**Beschreibung**

TECHNISCHES GEBIET

Die vorliegende Erfindung bezieht sich auf das Gebiet der Analyse und Vorhersage des Verhaltens vom mechanischen Bauteilen. Sie betrifft ein Verfahren zur Bestimmung des elasto-plastischen Verhaltens von Bauteilen gemäss dem Oberbegriff des Anspruchs 1.

STAND DER TECHNIK

Die Bauteile in Gasturbinen (Laufschaufeln, Leitschaufeln, Liner etc.) werden in der Regel so hoch beansprucht, dass sie nur eine endliche Lebensdauer aufweisen. Die Vorhersage dieser Lebensdauer ist für eine sichere und wirtschaftliche Auslegung von Gasturbinen notwendig.

Die Belastung der Bauteile setzt sich zusammen aus Kräften, hohen thermischen Lasten, Oxidation und Korrosion. Die mechanische und thermische Belastung führt in vielen Fällen bereits nach wenigen tausend Lastzyklen zum Ermüden der Bauteile. Diese niederzyklische Ermüdung wird im isothermen Fall durch LCF-Versuche (LCF = Low Cycle Fatigue) und im anisothermen Fall durch TMF-Versuche (TMF = Thermal Mechanical Fatigue) wiedergegeben.

In der Auslegungsphase der Gasturbine werden die durch die Belastung verursachten Spannungen ermittelt. Die Komplexität der Geometrie und/oder Belastung erfordert den Einsatz der Methode der Finiten Elemente (FE) zur Ermittlung der Spannungen. Da aber oft notwendige inelastische Berechnungen in der Regel aus Kosten- und Zeitgründen nicht möglich sind, basiert die Lebensdauervorhersage fast ausschliesslich auf linear-elastischen Spannungen. Meist stehen nur isotherme Daten (dehnungskontrollierte LCF-Versuche) zur Verfügung, weshalb auch anisotherme Zyklen mit LCF-Daten bewerten werden müssen.

Als Mass für die Schädigung (Schädigungsgesetz) wird dabei die Amplitude der totalen Vergleichsdehnung $\varepsilon_{v,ep}$ verwendet. Soll die erforderliche Zyklenzahl $N_{req}$ im Bauteil erreicht werden, so muss an jedem Ort des Bauteils die Amplitude der totalen Vergleichsdehnung $\varepsilon_{v,ep}$ der Beziehung

$$\text{(a)} \qquad\qquad \varepsilon_{v,ep} \leq \varepsilon_a^M(T_{dam}, N_{req})$$

genügen. Bei $\varepsilon_a^M$ handelt es sich um die zulässige totale Dehnungsamplitude, die aus isothermen LCF-Versuchen ermittelt wird. Sie ist für verschiedene Temperaturen und Zyklenzahlen zu bestimmen. Die der Schädigung zugrunde liegende Temperatur $T_{dam}$ muss für einen Zyklus mit veränderlicher Temperatur geeignet gewählt werden.

Falls die massgebende Belastung bei hohen Temperaturen über mehrere Minuten wirkt, ist mit zusätzlicher Schädigung zu rechnen. Um die reduzierte Lebensdauer aufgrund der Schädigungsakkumulation von Kriechermüdung und zyklischer müdung zu erfassen, werden LCF-Daten aus Versuchen mit Haltezeit ermittelt.

Das Schädigungsmass $\varepsilon_{v,ep}$ entspricht der Dehnungsamplitude eines eingespielten Zyklus. Dieser Zyklus wird aus dem linear-elastisch analysierten Zyklus über eine modifizierte Neuber-Regel ermittelt:

$$\text{(b)} \qquad\qquad \underline{\sigma}^* \cdot \underline{\varepsilon}^* = \underline{\sigma}_{ep} \cdot \underline{\varepsilon}_{ep}$$

mit dem Vektor der linear-elastischen Spannungsamplitude $\underline{\sigma}^*$, dem Vektor der elastisch-plastischen Spannungsamplitude $\underline{\sigma}_{ep}$, dem Vektor der linear-elastischen Dehnungsamplitude $\underline{\varepsilon}^*$ und dem Vektor der totalen elastisch-plastischen Dehnungsamplitude $\underline{\varepsilon}_{ep}$. Das Schädigungsmass $\varepsilon_{v,ep}$ wird über eine Vergleichshypothese aus dem Vektor der totalen elastisch-plastischen Dehnungsamplitude $\underline{\varepsilon}_{ep}$ bestimmt.

Die für die Ermittlung der totalen elastisch-plastischen Dehnungsamplitude $\underline{\varepsilon}_{ep}$ notwendige zyklische σ-ε-Kurve wird analytisch durch eine modifizierte Ramberg-Osgood-Beziehung dargestellt.

R.S. Alwar et al, "Inelastic strain concentration in directionally solidified materials", Transactions of the Canadian Society for mechanical engineering, Bd. 19, Nr. 3, Seiten 331-346, 1995, und K.S. Lond et al, "Investigation of systems, piping and pipe supports, and pumps and valves", Bd. 356, Seiten 39-52, 1997, offenbaren solche Verfahren zur Bestimmung des elasto-plastischen Verhaltens von anisotropen Materialen.

Mit Hilfe der Neuber-Regel können dann die in Gasturbinenkomponenten (Schaufeln, Brennkammern) auftretenden inelastischen Effekte näherungsweise erfasst werden. Diese Effekte müssen bei der Lebensdauervorhersage der Konstruktionen berücksichtigt werden. Bislang ist allerdings nur die Neuber-Regel (b) für Materialien mit isotropen mechanischen Verhalten bekannt.

Da aufgrund ihrer speziellen Eigenschaften im Gasturbinenbau bei den Kompo-nenten, speziell den Turbinenschaufeln, zunehmend (anisotrope) Einkristallmaterialien zur Anwendung kommen, wäre es für die Auslegung der Komponenteninsbesondere hinsichtlich der Bestimmung der Lebensdauer unter zyklischen Belastungen - wünschenswert, eine zum Fall isotroper Materialien analoge Berechnungsmethode zur Verfügung zu haben.

DARSTELLUNG DER ERFINDUNG

Es ist daher Aufgabe der Erfindung, ein Verfahren zur näherungsweisen Bestimmung des elasto-plastischen Verhaltens von einkristallinen Materialien bei hohen Temperaturen anzugeben, welches insbesondere zur Bestimmung der Lebensdauer von Komponenten einer Gasturbinenanlage aus einkristallinem Material angewendet werden kann.

Die Aufgabe wird durch die Gesamtheit der Merkmale des Anspruchs 1 gelöst. Der Kern der Erfindung besteht darin, zur Berücksichtigung von anisotropen Eigenschaften der Bauteile, wie sie insbesondere durch Einsatz von einkristallinen Materialien auftreten, eine modifizierte anisotrope Neuber-Regel der Form

$$\underline{\sigma}^{\bullet} \cdot \underline{\varepsilon}^{\bullet} = \underline{\sigma}^{\bullet} \cdot \underline{\underline{E}}^{-1} \cdot \underline{\sigma}^{\bullet} = \underline{\sigma}_{ep} \cdot \underline{\underline{E}}^{-1} \cdot \underline{\sigma}_{ep} + \underline{\sigma}_{ep} \cdot \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1}$$

einzusetzen.

Vorzugsweise werden dabei für die Grössen $\underline{\sigma}^*$ und $\underline{\sigma}_{ep}$ die folgenden Beziehungen

$$\underline{\sigma}^{\bullet} = \underline{D} \sqrt{\sigma^{\bullet 2}}$$

und

$$\underline{\sigma}_{ep} = \underline{D} \sqrt{\sigma_{ep}^2}$$

angenommen, wobei $\underline{D}$ einen Richtungsvektor der Länge 1 bezeichnet sowie die Beziehungen $\underline{\sigma}^* \cdot \underline{\sigma}^* = \sigma^{*2}$ und $\underline{\sigma}_{ep} \cdot \underline{\sigma}_{ep} = \sigma_{ep}^2$ gelten, und die modifizierte Neuber-Regel in der Form

$$\sigma^{\bullet 2} = \sigma_{ep}^2 + \sigma_{ep}^2 \underline{D} \cdot \frac{\underline{\underline{E}}}{E_R} \cdot \underline{D} \frac{\sigma_v^{*2}}{\sigma^{*2}} \alpha \left( \frac{\sigma_{ep}^2}{\sigma_0^2} \frac{\sigma_v^{*2}}{\sigma^{*2}} \right)^{n-1}$$

verwendet, mit einem anisotropen Korrekturterm

$$\underline{D} \cdot \frac{\underline{\underline{E}}}{E_R} \cdot \underline{D}$$

und einem inelastischen Korrekturterm

$$\frac{\sigma_v^{\bullet 2}}{\underline{\sigma}^{\bullet 2}}$$

Gemäss einer bevorzugten Ausgestaltung des Verfahrens wird die Gleichung gemäss der modifizierten Neuber-Regel mit einem iterativen Verfahren, insbesondere einer Newton-Iteration, gelöst.

Erfindungsgemäss wird das Verfahren zur Bestimmung der Lebensdauer von unter zyklischer Belastung stehenden Gasturbinenkomponenten angewendet.

WEGE ZUR AUSFÜHRUNG DER ERFINDUNG

Das der Erfindung zugrundeliegende Materialmodell wird aus einem plastischen Potential abgeleitet:

$$(1) \qquad \Omega = \frac{\alpha \sigma_0^2}{E_R n}\left(\frac{\sigma_{v,ep}^2}{\sigma_0^2}\right)^n$$

Hierbei sind

- $E_R$ die 'Referenz'-Steifigkeit. $E_R$ wird mitgeführt, um die formale Ähnlichkeit des Formelwerkes mit dem des bekannten isotropen Falles zu erhalten. ER wird zweckmäßigerweise in der Größenordnung der elastischen Konstanten des betrachteten Materials gewählt, z.B. $E_R$ = 100000 Nmm$^{-2}$,
- Q das plastische Potential des Materiales, aus dem durch Ableitung nach den Spannungen die plastischen Dehnungen berechnet werden,
- $\underline{\sigma}_{ep}$ = [$\sigma_{xx}$, $\sigma_{yy}$,...] der 'Vektor' der Spannungen, und
- $\sigma_{v,ep}$ eine anisotrope Vergleichsspannung (s.u.).

Die plastischen Dehnungen ergeben sich dann zu

$$(2) \qquad \underline{\varepsilon}_{pl} = \frac{\partial \Omega}{\partial \underline{\sigma}_{ep}}$$

Aus dem plastischen Potential $\Omega$ werden also durch partielle Ableitung nach den Spannungen $\underline{\sigma}_{ep}$ die plastischen Dehnungen $\underline{\varepsilon}_{pl}$ gebildet.

Mit Gl. (1) und (2) wird

$$(3) \qquad \frac{\partial \Omega}{\partial \underline{\sigma}_{ep}} = \frac{1}{2}\frac{\partial \sigma_{v,ep}^2}{\partial \underline{\sigma}_{ep}}\frac{\alpha}{E_R}\left(\frac{\sigma_{v,ep}^2}{\sigma_0^2}\right)^{n-1} .$$

$\sigma_{v,ep}$ ist die (anisotrope) Vergleichsspannung. Im vorliegenden anisotropen Fall kann die Vergleichsspannung nach HILL verwendet werden:

(4)

$$\sigma_{v,ep}^2 = \left[\, F(\sigma_{yy} - \sigma_{zz})^2 + G(\sigma_{zz} - \sigma_{xx})^2 + H(\sigma_{xx} - \sigma_{yy})^2 + 2L\sigma_{yz}^2 + 2M\sigma_{zx}^2 + 2N\sigma_{xy}^2 \,\right] \cdot \frac{1}{2}$$

Dies ist der allgemeine Fall mit sechs unabhängigen plastischen Materialkonstanten F, G, H sowie L, M, und N. Der Spezialfall mit 1 = F = G = H = 3L = 3M = 3N ergibt die bekannte von-Mises Vergleichsspannung für isotrope Materialien; der Spezialfall mit zwei unabhängigen Parametern F = G = H und L = M = N ergibt die Formulierung für kubische Kristallsymmetrie, die hier für Einkristallmaterialien (z.B. CMSX-4) interessant ist.
Aus Gl. (3) bekommt man

$$(5) \qquad \underline{\varepsilon}_{pl} = \varepsilon_v \frac{\partial \sigma_{v,ep}^2}{\partial \underline{\sigma}_{ep}}$$

mit dem 'Richtungsvektor'

$$(6) \qquad \frac{\partial \sigma_{v,ep}^2}{\partial \underline{\sigma}} = \begin{pmatrix} -G(\sigma_{zz} - \sigma_{xx}) + H(\sigma_{xx} - \sigma_{yy}) \\ F(\sigma_{yy} - \sigma_{zz}) - H(\sigma_{xx} - \sigma_{yy}) \\ -F(\sigma_{yy} - \sigma_{zz}) + G(\sigma_{zz} - \sigma_{xx}) \\ 2N\sigma_{xy} \\ 2M\sigma_{zx} \\ 2L\sigma_{yz} \end{pmatrix}$$

und der 'Vergleichsdehnung'

$$(7) \qquad \varepsilon_v = \frac{\alpha}{E_R} \cdot \left( \frac{\sigma_{v,ep}^2}{\sigma_0^2} \right)^{n-1}$$

Für die hier interessierenden Einkristall-Materialien mit kubischer Symmetrie wird die linear-elastische Materialgleichung

$$(8) \qquad \underline{\underline{E}}^{-1} = \begin{pmatrix} 1/E & -v/E & -v/E & 0 & 0 & 0 \\ -v/E & 1/E & -v/E & 0 & 0 & 0 \\ -v/E & -v/E & 1/E & 0 & 0 & 0 \\ 0 & 0 & 0 & 1/G & 0 & 0 \\ 0 & 0 & 0 & 0 & 1/G & 0 \\ 0 & 0 & 0 & 0 & 0 & 1/G \end{pmatrix}$$

E, G und ν sind die drei unabhängigen elastischen Materialkonstanten für kubisch symmetrische (Einkristall-)Materialien.

Das vollständige anisotrope Ramberg-Osgood Materialgesetz ergibt sich als Summe der elastischen und plastischen Dehnungen zu

$$(9) \qquad \underline{\varepsilon}_{ep} = \underline{\underline{E}}^{-1} \cdot \underline{\sigma}_{ep} + \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1}$$

Hierbei sind $\underline{\varepsilon}_{ep}$ und $\underline{\sigma}_{ep}$ die nach der anisotropen Neuber-Regel abgeschätzten Dehnungen und Spannungen.

Wie im Falle der isotropen Neuber-Regel wird die Arbeit der linearen Größen und die Arbeit der inelastischen Größen gleichgesetzt

$$(10) \qquad \underline{\sigma}^* \cdot \underline{\varepsilon}^* = \underline{\sigma}^* \cdot \underline{\underline{E}}^{-1} \cdot \underline{\sigma}^* = \underline{\sigma}_{ep} \cdot \underline{\underline{E}}^{-1} \cdot \underline{\sigma}_{ep} + \underline{\sigma}_{ep} \cdot \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1}$$

Hier sind $\underline{\varepsilon}^*$ und $\underline{\sigma}^*$ die mit der linearen FE -Berechnung ermittelten Dehnungen und Spannungen.

Aus Gl. (10) folgt sofort

$$(11) \qquad \sigma^{*2} = \sigma_{ep}^2 + \underline{\sigma}_{ep} \cdot \frac{\underline{\underline{E}}}{E_R} \cdot \frac{\partial \sigma_{v,ep}^2}{\partial \underline{\sigma}_{ep}} \alpha \left( \frac{\sigma_{v,ep}^2}{\sigma_0^2} \right)^{n-1}$$

Hier wird die zusätzliche Annahme eingeführt, dass die inelastischen Spannungen proportional zu den elastischen Spannungen (aus der Finite-Elemente-Berechnung) sein sollen. Oder anders gesagt wird angenommen, dass sich die Richtung der Spannung im Spannungsraum nicht ändert, wenn man von den elastischen Spannungen σ* zu den geschätzten inelastischen Spannungen übergeht. Der 'Richtungsvektor' $\underline{D}$ kann dadurch bestimmt werden aus

$$(12) \qquad \underline{\sigma}^* = \underline{D} \sqrt{\sigma^{*2}}$$

Für die inelastischen (geschätzten) Spannungen gilt jetzt mit dem gleichen Richtungsvektor

$$(13) \qquad \underline{\sigma}_{ep} = \underline{D} \sqrt{\sigma_{ep}^2}$$

Für die Vergleichsspannungen der elastischen (Finite-Elemente-) Ergebnisse folgt

$$(14) \qquad \sigma_v^{*2} = \frac{1}{2} [F(D_{yy} - D_{zz})^2 + \dots] \sigma^{*2}$$

Für die elasto-plastischen Vergleichsspannungen gilt entsprechend

$$(15) \qquad \sigma_{v,ep}^2 = \frac{1}{2}[F(D_{yy} - D_{zz})^2 + ...] \ \sigma_{ep}^2$$

Hieraus bekommt man

$$(16) \qquad \frac{\sigma^{*2}}{\sigma_v^{*2}} = \frac{\sigma_{ep}^2}{\sigma_{v,ep}^2}$$

Die inelastische Vergleichsspannung kann nun durch das Produkt der 'Länge' des elastoplastischen Spannungsvektors und eines' Anisotropiefaktors' ausgedrückt werden

$$(17) \qquad \sigma_{v,ep}^2 = \sigma_{ep}^2 \ \frac{\sigma_v^{*2}}{\sigma^{*2}}$$

Damit erhält man für die Ableitung der elastoplastischen Vergleichsspannung nach den elastoplastischen Spannungen

$$(18) \qquad \frac{\partial \sigma_{v,ep}^2}{\partial \underline{\sigma}_{ep}} = \frac{\partial \sigma_{ep}^2}{\partial \underline{\sigma}_{ep}} \ \frac{\sigma_v^{*2}}{\sigma^{*2}} = \underline{\sigma}_{ep} \ \frac{\sigma_v^{*2}}{\sigma^{*2}}$$

Hieraus folgt sofort

$$(19) \qquad \sigma^{*2} = \sigma_{ep}^2 + \sigma_{ep}^2 \ \underline{D} \cdot \frac{\underline{\underline{E}}}{E_R} \cdot \underline{D} \ \frac{\sigma_v^{*2}}{\sigma^{*2}} \alpha \left( \frac{\sigma_{ep}^2}{\sigma_0^2} \cdot \frac{\sigma_v^{*2}}{\sigma^{*2}} \right)^{n-1}$$

Der anisotrope elastische Korrekturterm

$$(20) \qquad \underline{D} \cdot \frac{\underline{\underline{E}}}{E_R} \cdot \underline{D}$$

ist eine skalare Größe, die aus den elastischen Spannungen und der Steifigkeitsmatrix leicht berechnet werden kann. Der inelastische Korrekturterm

$$(21) \qquad \frac{\sigma_v^{*2}}{\sigma^{*2}}$$

ist ebenfalls eine skalare Größe, die aus den elastischen Spannungen zusammen mit den anisotropen Parametern (Hillsche Konstanten F,G, ...) bestimmt werden kann. Die o.a. Gleichung (19) für $\sigma_{ep}^2$ kann wie im Falle der 'klassischen' Neuber-Regel mit einem iterativen Verfahren (Newton-Iteration) gelöst werden. Ist $\sigma_{ep}^2$ ermittelt, kann mit Hilfe von $\underline{D}$ der elastoplastische Spannungsvektor sofort berechnet werden.

Zur Nachbearbeitung der 'linearen' Resultate der Finite-Elemente-Berechnungen ist es zweckmäßig, die o.a. Prozedur in ein Post-Processing-Programm zu implementieren, welches die 'linearen' Daten für die Dehnungen und Spannungen aus Ergebnisfiles der FE-Programme liest und diese zu den gesuchten inelastischen Ergebnissen weiterverarbeitet. Im Falle der isotropen Neuberregel ist dies Stand der Technik. Die Erweiterung auf die hier beschriebene anisotrope Neuberregel kann sehr leicht durchgeführt werden, indem die beiden o.a. 'Korrekturfaktoren' in die Iterationsprozedur eingebaut werden.

**Patentansprüche**

1.  Verfahren zur Bestimmung des elasto-plastischen Verhaltens von aus anisotropem Material bestehenden Bauteilen, insbesondere von Gasturbinenanlagen, bei hohen Temperaturen, bei welchem Verfahren zunächst das linear-elastische Verhalten bestimmt und auf der Grundlage der linear-elastischen Resultate durch Anwendung der Neuber-Regel das inelastische Verhalten mitberücksichtigt wird, **dadurch gekennzeichnet, dass** zur Berücksichtigung von anisotropen Eigenschaften der Bauteile, wie sie insbesondere durch Einsatz von einkristallinen Materialien auftreten, eine modifizierte anisotrope Neuber-Regel der Form

$$\underline{\sigma}^* \cdot \underline{\varepsilon}^* = \underline{\sigma}^* \cdot \underline{\underline{E}}^{-1} \cdot \underline{\sigma}^* = \underline{\sigma}_{ep} \cdot \underline{\underline{E}}^{-1} \cdot \underline{\sigma}_{ep} + \underline{\sigma}_{ep} \cdot \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1}$$

verwendet wird, mit

    $\underline{\sigma}^*$ = ermittelte lineare Spannung,
    $\underline{\varepsilon}^*$ = ermittelte lineare Dehnung,
    $\underline{\sigma}_{ep}$ = abgeschätzte inelastische Spannung,
    $\sigma_{v,ep}$ = Hill'sche elastisch-plastische Vergleichsspannung,
    $\underline{E}^{-1}$ = inverse Steifigkeitsmatrix
    $E_R$ = Referenz-Steifigkeit,
    $\sigma_0$ = Bezugsspannung, und
    $\alpha$, n = Konstanten.

2.  Verfahren nach Anspruch 1, **dadurch gekennzeichnet, dass** für die Grössen $\underline{\sigma}^*$ und $\underline{\sigma}_{ep}$ die folgenden Beziehungen

$$\underline{\sigma}^* = \underline{D} \cdot \sqrt{\underline{\sigma}^{*2}}$$

und

$$\underline{\sigma}_{ep} = \underline{D} \cdot \sqrt{\underline{\sigma}_{ep}^2}$$

angenommen werden, wobei $\underline{D}$ einen Richtungsvektor der Länge 1 bezeichnet, und dass die modifizierte Neuber-Regel in der Form

$$\sigma^{*2} = \sigma_{ep}^2 + \sigma_{ep}^2 \underline{D} \cdot \frac{\underline{\underline{E}}}{E_R} \cdot \underline{D} \frac{\sigma_v^{*2}}{\sigma^{*2}} \cdot \alpha \left( \frac{\sigma_{ep}^2}{\sigma_0^2} \cdot \frac{\sigma_v^{*2}}{\sigma^{*2}} \right)^{n-1}$$

verwendet wird, mit einem anisotropen Korrekturterm

$$\underline{D} \cdot \frac{\underline{\underline{E}}}{E_R} \cdot \underline{D}$$

und einem inelastischen Korrekturterm

$$\frac{\sigma_v^{*2}}{\sigma^{*2}} \cdot$$

3. Verfahren nach Anspruch 2, **dadurch gekennzeichnet, dass** die Gleichung gemäss der modifizierten Neuber-Regel mit einem iterativen Verfahren, insbesondere einer Newton-Iteration, gelöst wird.

4. Anwendung des Verfahrens nach einem der Ansprüche 1 bis 3 zur Bestimmung der Lebensdauer von unter zyklischer Belastung stehenden Gasturbinenkomponenten.

## Claims

1. Method for determining the elasto-plastic behaviour of components consisting of anisotropic material, in particular of gas turbine installations, at high temperatures, in which method, first of all, the linear-elastic behaviour is determined and, on the basis of the linear-elastic results, the inelastic behaviour is also taken into account by applying Neuber's rule, **characterized in that**, to take account of anisotropic properties of the components, as occur in particular through the use of single-crystal materials, a modified anisotropic Neuber's rule of the form

$$\underline{\sigma}^* \cdot \underline{\varepsilon}^* = \underline{\sigma}^* \cdot \underline{\underline{E}}^{-1} \cdot \underline{\sigma}^* = \underline{\sigma}_{ep} \cdot \underline{\underline{E}}^{-1} \cdot \underline{\sigma}_{ep} + \underline{\sigma}_{ep} \cdot \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1}$$

is used where

$\underline{\sigma}^*$ = determined linear stress,
$\underline{\varepsilon}^*$ = determined linear strain,
$\underline{\sigma}_{ep}$ = estimated inelastic stress,
$\sigma_{v,ep}$ = Hill's elastic-plastic comparative stress,
$\underline{\underline{E}}^{-1}$ = inverse stiffness matrix
$E_R$ = reference stiffness,
$\sigma_0$ = reference stress, and
$\alpha, n$ = constant.

2. Method according to Claim 1, **characterized in that** the following relationships

$$\underline{\sigma}^{*} = \underline{D} \cdot \sqrt{\underline{\sigma}^{*2}}$$

and

$$\underline{\sigma}_{ep} = \underline{D} \cdot \sqrt{\underline{\sigma}_{ep}^{2}}$$

are assumed for the variables $\underline{\sigma}^{*}$ and $\underline{\sigma}_{ep}$, where $\underline{D}$ denotes a directional vector of length 1, and **in that** the modified Neuber's rule is used in the form

$$\sigma^{*2} = \sigma_{ep}^{2} + \sigma_{ep}^{2} \, \underline{D} \cdot \frac{\underline{\underline{E}}}{E_{R}} \cdot \underline{D} \, \frac{\sigma_{v}^{*2}}{\sigma^{*2}} \cdot \alpha \left( \frac{\sigma_{ep}^{2}}{\sigma_{0}^{2}} \cdot \frac{\sigma_{v}^{*2}}{\sigma^{*2}} \right)^{n-1}$$

with anisotropic correction term

$$\underline{D} \cdot \frac{\underline{\underline{E}}}{E_{R}} \cdot \underline{D}$$

and an inelastic correction term

$$\frac{\sigma_{v}^{*2}}{\sigma^{*2}}$$

3. Method according to Claim 2, **characterized in that** the equation according to the modified Neuber's rule is solved using an iterative method, in particular a Newton iteration.

4. Application of the method according to one of Claims 1 to 3 for determining the service life of gas turbine components which are under cyclic load.

**Revendications**

1. Procédé de détermination du comportement élastique-plastique à haute température de composants réalisés en un matériau anisotrope, en particulier dans des installations de turbines à gaz, dans lequel on détermine d'abord le comportement élastique linéaire et, sur base des résultats élastiques linéaires et en appliquant la règle de Neuber, on tient compte également du comportement inélastique, **caractérisé en ce que** pour tenir compte des propriétés anisotropes des composants qui résultent en particulier de l'utilisation de matériaux monocristallins, on utilise une règle de Neuber anisotrope modifiée qui a la forme :

$$\underline{\sigma}^{*} \cdot \underline{\varepsilon}^{*} = \underline{\sigma}^{*} \cdot \underline{\underline{E}}^{-1} \cdot \underline{\sigma}^{*} = \underline{\sigma}_{ep} \cdot \underline{\underline{E}}^{-1} \cdot \underline{\sigma}_{ep} + \underline{\sigma}_{ep} \cdot \frac{\partial \sigma_{v,ep}^{2}}{\partial \underline{\sigma}_{ep}} \frac{\alpha}{E_{R}} \left( \frac{\sigma_{v,ep}^{2}}{\sigma_{0}^{2}} \right)^{n-1} \Bigg|$$

dans laquelle :

$\underline{\sigma}^*$ = la tension linéaire déterminée
$\underline{\varepsilon}^*$ = l'allongement linéaire déterminé
$\underline{\sigma}_{ep}$ = la contrainte inélastique estimée
$\sigma_{v,ep}$ = la tension comparative élastique-plastique de Hill
$\underline{E}^{-1}$ = l'inverse de la matrice de rigidité
$\underline{E}_R$ = la rigidité de référence
$\sigma_0$ = la tension de référence et
$\alpha$, n = des constantes.

2. Procédé selon la revendication 1, **caractérisé en ce que** pour les grandeurs

$\underline{\sigma}^*$

et

$\underline{\sigma}_{ep}$

on suppose les équations :

$$\underline{\sigma}^* = \underline{D} \cdot \sqrt{\underline{\sigma}^{*2}}$$

et

$$\underline{\sigma}_{ep} = \underline{D} \cdot \sqrt{\underline{\sigma}_{ep}^2}$$

dans lesquelles D est un vecteur d'orientation de longueur 1, et **en ce que** l'on utilise la règle de Neuber modifiée sous la forme :

$$\sigma^{*2} = \sigma_{ep}^2 + \sigma_{ep}^2 \underline{D} \cdot \frac{\underline{\underline{E}}}{E_R} \cdot \underline{D} \frac{\sigma_v^{*2}}{\sigma^{*2}} \cdot \alpha \left( \frac{\sigma_{ep}^2}{\sigma_0^2} \cdot \frac{\sigma_v^{*2}}{\sigma^{*2}} \right)^{a-1}$$

avec un terme de correction anisotrope

$$\underline{D} \cdot \frac{\underline{\underline{E}}}{E_R} \cdot \underline{D}$$

et un terme de correction inélastique

$$\frac{\sigma_v^{*2}}{\sigma^{*2}} .$$

3. Procédé selon la revendication 2, **caractérisé en ce que** l'équation de la règle de Neuber modifiée est résolue à l'aide d'un procédé itératif et en particulier d'une itération de Newton.

4. Utilisation du procédé selon l'une des revendications 1 à 3 pour déterminer la durée de vie de composants de turbine à gaz exposés à des sollicitations cycliques.